# EUROPÄISCHE PATENTANMELDUNG

(11) **EP 3 738 814 A1**
(43) Veröffentlichungstag der Anmeldung: **18.11.2020**
(21) Anmeldenummer: 20162711.4
(22) Anmeldetag: 12.03.2020
(51) Int. Cl.: B60K 15/077, F16H 57/04

(54) **BEHÄLTERANORDNUNG ZUM AUFNEHMEN EINES BETRIEBSMITTELS EINES KRAFTFAHRZEUGS**

(30) Priorität: 15.03.2019 DE 102019203520
(71) Anmelder: ZF Friedrichshafen AG, 88046 Friedrichshafen (DE)
(72) Erfinder: Lachhammer, Andreas, 94099 Ruhstorf (DE)

(57) **Zusammenfassung**

Die Erfindung bezieht sich auf eine Behälteranordnung zum Aufnehmen eines Betriebsmittels 5 eines Kraftfahrzeugs, mit einem Behälter 1, der während des Normalbetriebs in Horizontallage des Kraftfahrzeugs bis zu einem bestimmten Betriebsniveau mit einem Betriebsmittel 5 gefüllt ist sowie dessen Betriebsmittelspiegel 6 sich horizontal erstreckt. Dabei ragt in den Behälter 1 ein Ansaugrohr 2 einer Betriebsmittelpumpe 7, dessen Ansaugöffnung 3 im Bereich des Bodens 4 des Behälters 1 angeordnet ist. In dem Behälter 1 sind oberhalb des bestimmten Betriebsniveaus des Betriebsmittels 5 bei Horizontallage des Kraftfahrzeugs ein oder mehrere Verdrängungskörper 9, 9' derart angeordnet, dass sie bei betriebsbedingtem Abweichen des Betriebsmittelspiegels 6 von der Horizontalen in das Betriebsmittel 5 ganz oder teilweise eintauchen.

## Beschreibung

Die Erfindung bezieht sich auf eine Behälteranordnung zum Aufnehmen eines Betriebsmittels eines Kraftfahrzeugs, mit einem Behälter, der während des Normalbetriebs in Horizontallage des Kraftfahrzeugs bis zu einem bestimmten Betriebsniveau mit einem Betriebsmittel gefüllt ist sowie dessen Betriebsmittelspiegel sich horizontal erstreckt, wobei in den Behälter ein Ansaugrohr einer Betriebsmittelpumpe ragt, dessen Ansaugöffnung im Bereich des Bodens des Behälters angeordnet ist.

Bei einer derartigen Behälteranordnung zum Aufnehmen eines Betriebsmittels eines Kraftfahrzeugs besteht das Problem, dass bei einer Position des Kraftfahrzeugs an einer Steigung bzw. einem Gefälle oder bei stärkerer Beschleunigung bzw. Verzögerung oder bei einer Kurvenfahrt während des Fahrbetriebs das Betriebsmittel sich in einen Randbereich des Behälters bewegt und dabei trotz ansich noch ausreichendem Füllgrad des Behälters die Ansaugöffnung des Ansaugrohres nicht mehr in das Betriebsmittel eingetaucht ist und Betriebsmittel von der Betriebsmittelpumpe gefördert werden kann.

Aufgabe der Erfindung ist es daher eine Behälteranordnung zum Aufnehmen eines Betriebsmittels eines Kraftfahrzeugs der eingangs genannten Art zu schaffen, die auch bei fahrbetriebsbedingtem Bewegen des ansich ausreichenden Betriebsmittels in einen Randbereich des Behälters ein Fördern von Betriebsmittel durch die Betriebsmittelpumpe erlaubt.

Diese Aufgabe wird erfindungsgemäß dadurch gelöst, dass in dem Behälter oberhalb des bestimmten Betriebsniveaus des Betriebsmittels bei Horizontallage des Kraftfahrzeugs ein oder mehrere Verdrängungskörper derart angeordnet sind, dass sie bei betriebsbedingtem Abweichen des Betriebsmittelspiegels von der Horizontalen in das Betriebsmittel ganz oder teilweise eintauchen.

Durch das Eintauchen der Verdrängungskörper in das ansich für ein Ansaugen durch das Ansaugrohr ausreichende Betriebsmittel bei einem fahrbetriebsbedingtem Bewegen des Betriebsmittels in einem Randbereich des Behälters fällt das Niveau des Betriebsmittels im Bereich der Ansaugöffnung des Ansaugrohres nicht so stark, dass die Ansaugöffnung aus dem Betriebsmittel austauchen würde. Damit kann die Betriebsmittelpumpe weiterfördern, ohne dass es zu Schädigungen oder Betriebsunterbrechungen an den mit Betriebsmittel zu versorgenden Komponenten des Kraftfahrzeugs kommt.

Vorzugsweise ist die Ansaugöffnung des Ansaugrohres im Bereich der tiefsten Stelle des Bodens des Behälters angeordnet um eine Versorgung mit Betriebsmittel durch die Betriebsmittelpumpe bis zu einer weitgehenden Entleerung des Behälters zu ermöglichen.

Dazu kann die Ansaugöffnung des Ansaugrohres in einem mittleren Bereich des Behälters angeordnet sein.

Ebenso bevorzugt ist es vorgesehen, dass die Ansaugöffnung des Ansaugrohres in einem Seitenbereich des Behälters angeordnet ist.

Ist die Ansaugöffnung des Ansaugrohres in einer Vertiefung am Boden des Behälters angeordnet, so kann sich dort der letzte Rest an Betriebsmittel sammeln und ein weitgehendes Entleeren des Behälters ermöglichen.

Sind die Verdrängungskörper aus einem Werkstoff geringen spezifischen Gewichts ausgebildet, so kommt es durch die Verdrängungskörper zu keiner wesentlichen Erhöhung des Gewichts des Kraftfahrzeugs und somit auch zu keiner wesentlichen Erhöhung des Energieverbrauchs für den Fahrbetrieb. Besonders bevorzugt sind die Verdrängungskörper aus einem oder mehreren Kunststoffen oder aus einem oder mehreren Leichtmetallen, z.B. Aluminium, ausgebildet.

Vorzugsweise sind die Verdrängungskörper im Bereich der radial umlaufenden Seitenwand des Behälters angeordnet, da bei einem betriebsbedingten Abweichen des Betriebsmittelspiegels von der Horizontalen das Betriebsmittel am meisten dorthin verdrängt wird und somit die Verdrängungskörper dort am meisten in das Betriebsmittel eintauchen können.

Dabei sind die Verdrängungskörper vorzugsweise im Bereich der in Fahrzeuglängsrichtung vorderen und/oder hinteren Seitenwand des Behälters angeordnet, da ein betriebsbedingtes Abweichen des Betriebsmittelspiegels von der Horizontalen in den meisten Betriebsbedingungen dorthin erfolgt. Zusätzlich sind bevorzugt auch Verdrängungskörper im Bereich der seitlichen Seitenwände angeordnet.

Der Behälter kann ein Kraftstofftank oder ein Ölsumpf eines Getriebes des Kraftfahrzeugs sein.

Ein Ausführungsbeispiel der Erfindung ist in der Zeichnung dargestellt und wird im Folgenden näher beschrieben. Es zeigen:
- Figur 1: eine schematische Seitenansicht einer Behälteranordnung zum Aufnehmen eines Betriebsmittels nach dem Stand der Technik mit betriebsbedingtem Abweichen des Betriebsmittelspiegels von der Horizontalen
- Figur 2: eine erfindungsgemäße schematische Seitenansicht einer Behälteranordnung zum Aufnehmen eines Betriebsmittels ohne betriebsbedingtem Abweichen des Betriebsmittelspiegels von der Horizontalen
- Figur 3: eine erfindungsgemäße schematische Seitenansicht der Behälteranordnung zum Aufnehmen eines Betriebsmittels nach Figur 1 mit betriebsbedingtem Abweichen des Betriebsmittelspiegels von der Horizontalen.

Die in den Figuren dargestellten Behälteranordnungen weisen einen Behälter 1 zum Aufnehmen eines Betriebsmittels eines Kraftfahrzeugs auf, in den ein Ansaugrohr 2 hineinragt. Die Ansaugöffnung 3 des Ansaugrohres 2 befindet sich im mittleren Bereich des Behälters 1 im Bereich des Bodens 4 des Behälters 1.

Der Behälter ist mit einem flüssigen Betriebsmittel 5 gefüllt, dessen Volumen bei Horizontallage des Kraftfahrzeugs so ausreichend ist, dass die Ansaugöffnung 3 des Ansaugrohres sich unter dem Betriebsmittelspiegel 6 befindet und somit Betriebsmittel 5 von einer in dem Ansaugrohr 2 angeordneten Betriebsmittelpumpe 7 angesaugt und einer Komponente des Fahrzeugs zugefördert werden kann.

Steht das Kraftfahrzeug an einer Straße mit einer Steigung bzw. einem Gefälle oder wird das Fahrzeug stärker beschleunigt bzw. abgebremst oder befindet das Fahrzeug sich in einer Kurvenfahrt, bewegt sich das flüssige Betriebsmittel 5 zu einer radial umlaufenden Seitenwand 8, 8' des Behälters 1. Je nach Ausrichtung des Fahrzeugs zum Gefälle bzw. zur Steigung, also in Abhängigkeit davon, ob die Längsachse bzw. die Querachse des Fahrzeugs durch die Steigung bzw. das Gefälle geneigt wird, bewegt sich das flüssige Betriebsmittel 5 zu einer seitlichen Seitenwand bzw. zur vorderen oder hinteren Seitenwand 8, 8'.

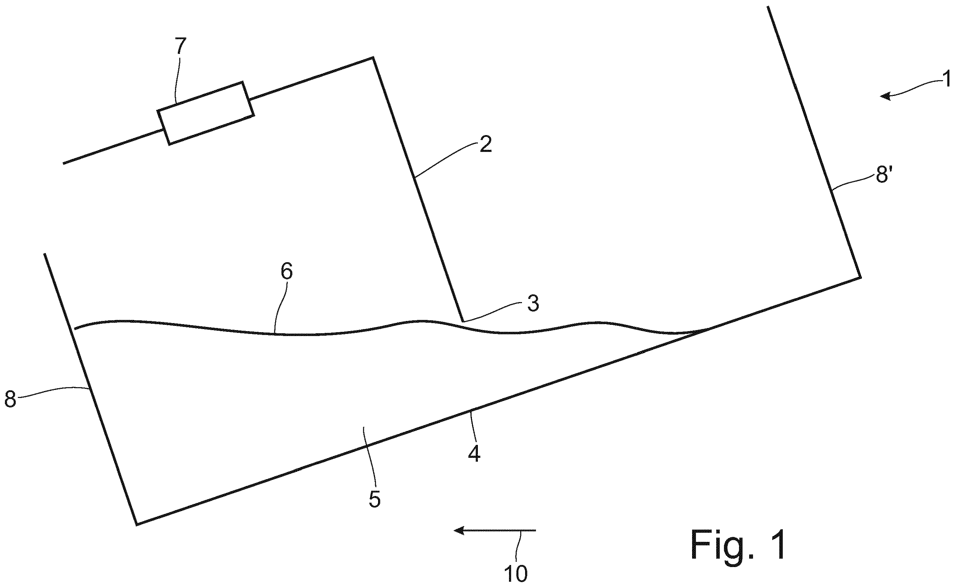

Bei einer Behälteranordnung nach dem Stand der Technik, wie sie in Figur 1 dargestellt ist, neigt sich dabei der Betriebsmittelspiegel 6 derart gegenüber der Horizontalen, dass es zu einem Austauchen der Ansaugöffnung 3 des Ansaugrohres 2 aus dem Betriebsmittel 5 kommt und die Betriebsmittelpumpe 7 kein Betriebsmittel 6 mehr ansaugen kann. Dies kann zu Beschädigungen der Betriebsmittelpumpe 7 und/oder der mit Betriebsmittel 5 zu versorgenden Komponenten des Kraftfahrzeugs führen.

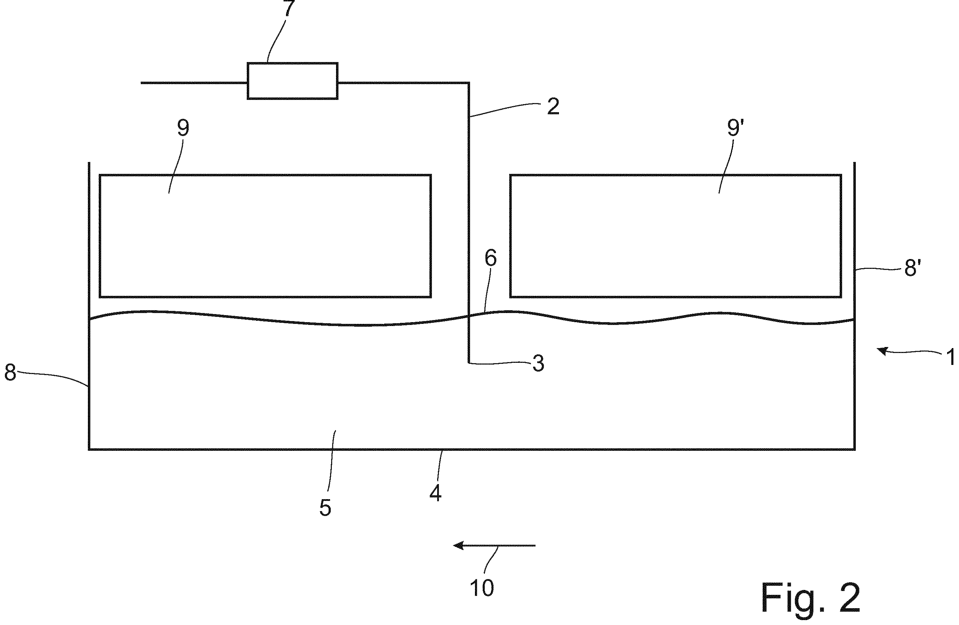

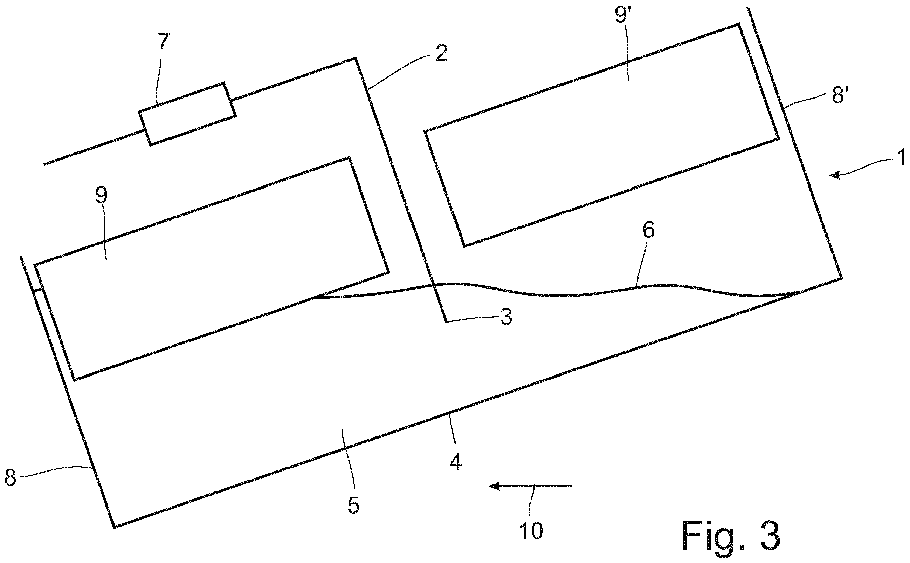

Bei der in den Figuren 2 und 3 dargestellten erfindungsgemäßen Ausbildung der Behälteranordnung sind in dem Behälter 1 oberhalb eines bestimmten Betriebsniveaus des Betriebsmittels 5 bei Horizontallage des Kraftfahrzeugs zwei Verdrängungskörper 9, 9' angeordnet. Dabei ist ein Verdrängungskörper 9 im Bereich der in Fahrzeuglängsrichtung 10 vorderen Seitenwand 8 und ein Verdrängungskörper 9' im Bereich der in Fahrzeuglängsrichtung 10 hinteren Seitenwand 8' des Behälters 1 angeordnet.

In Figur 2 ist die Behälteranordnung in dem Betriebszustand dargestellt, in dem sich das bestimmte Betriebsniveau des Betriebsmittels 5 bei Horizontallage des Kraftfahrzeugs befindet. Der Betriebsmittelspiegel 6 erstreckt sich dabei horizontal.

Der erste Verdrängungskörper 9 ist im Bereich der in Fahrzeuglängsrichtung 10 vorderen Seitenwand 8 und der zweite Verdrängungskörper 9' ist im Bereich der in Fahrzeuglängsrichtung 10 hinteren Seitenwand 8' des Behälters 1 oberhalb des Betriebsmittelspiegels 6 angeordnet, so dass die Verdrängungskörper 9, 9' nicht in das Betriebsmittel 5 eintauchen.

Dies ist ein Zustand, wie er bei horizontal stehendem oder horizontal fahrenden Kraftfahrzeug eingenommen ist.

Steht oder fährt das Fahrzeug an einer abfallenden Straße oder wird das Fahrzeug stark abgebremst, bewegt sich das flüssige Betriebsmittel 5 zur vorderen Seitenwand 8 des Behälters 1 hin, so dass der Betriebsmittelspiegel 6 sich nicht mehr parallel sondern geneigt zur Horizontalen erstreckt.

Wie Figur 3 zeigt, taucht dabei der Verdrängungskörper 9 in das Betriebsmittel 5 ein. Da nun das Volumen des in Fahrzeuglängsrichtung 10 vorderen Bereichs des Behälters um das Eintauchvolumen des Verdrängungskörpers 9 verringert ist, fällt der Betriebsmittelspiegel 6 im Bereich der Ansaugöffnung 3 des Ansaugrohres 2 nicht unter die Ansaugöffnung 3 sondern verbleibt über ihr. Damit kann die Betriebsmittelpumpe 7 auch in dieser Betriebssituation weiterhin Betriebsmittel 5 fördern.

### Bezugszeichen

- 1: Behälter
- 2: Ansaugrohr
- 3: Ansaugöffnung
- 4: Boden
- 5: Betriebsmittel
- 6: Betriebsmittelspiegel
- 7: Betriebsmittelpumpe
- 8: vordere Seitenwand
- 8': hintere Seitenwand
- 9: erster Verdrängungskörper
- 9': zweiter Verdrängungskörper
- 10: Fahrzeuglängsrichtung

## Patentansprüche

1. Behälteranordnung zum Aufnehmen eines Betriebsmittels (5) eines Kraftfahrzeugs, mit einem Behälter (1), der während des Normalbetriebs in Horizontallage des Kraftfahrzeugs bis zu einem bestimmten Betriebsniveau mit einem Betriebsmittel (5) gefüllt ist sowie dessen Betriebsmittelspiegel (6) sich horizontal erstreckt, wobei in den Behälter (1) ein Ansaugrohr (2) einer Betriebsmittelpumpe (7) ragt, dessen Ansaugöffnung (3) im Bereich des Bodens (4) des Behälters (1) angeordnet ist, **dadurch gekennzeichnet, dass** in dem Behälter (1) oberhalb des bestimmten Betriebsniveaus des Betriebsmittels (5) bei Horizontallage des Kraftfahrzeugs ein oder mehrere Verdrängungskörper (9, 9') derart angeordnet sind, dass sie bei betriebsbedingtem Abweichen des Betriebsmittelspiegels (6) von der Horizontalen in das Betriebsmittel (5) ganz oder teilweise eintauchen.

2. Behälteranordnung nach Anspruch 1, **dadurch gekennzeichnet, dass** die Ansaugöffnung (3) des Ansaugrohres (2) im Bereich der tiefsten Stelle des Bodens (4) des Behälters (1) angeordnet ist.

3. Behälteranordnung nach einem der vorhergehenden Ansprüche, **dadurch gekennzeichnet, dass** die Ansaugöffnung (3) des Ansaugrohres (2) in einem mittleren Bereich des Behälters (1) angeordnet ist.

4. Behälteranordnung nach einem der vorhergehenden Ansprüche, **dadurch gekennzeichnet, dass** die Ansaugöffnung (3) des Ansaugrohres (2) in einer Vertiefung am Boden des Behälters angeordnet ist.

5. Behälteranordnung nach einem der vorhergehenden Ansprüche, **dadurch gekennzeichnet, dass** die Verdrängungskörper (9, 9') aus einem Werkstoff geringen spezifischen Gewichts ausgebildet sind.

6. Behälteranordnung nach einem der vorhergehenden Ansprüche, **dadurch gekennzeichnet, dass** die Verdrängungskörper (9, 9') im Bereich der radial umlaufenden Seitenwand (8, 8') des Behälters (1) angeordnet sind.

7. Behälteranordnung nach einem der vorhergehenden Ansprüche, **dadurch gekennzeichnet, dass** die Verdrängungskörper (9, 9') im Bereich der in Fahrzeuglängsrichtung (10) vorderen und/oder hinteren Seitenwand (8, 8') des Behälters (1) angeordnet sind.

8. Behälteranordnung nach einem der vorhergehenden Ansprüche, **dadurch gekennzeichnet, dass** der Behälter (1) ein Ölsumpf eines Getriebes des Kraftfahrzeugs ist.
